# EUROPEAN PATENT APPLICATION

(11) **EP 4 664 719 A2**
(43) Date of publication of application: **17.12.2025**
(21) Application number: 25178949.1
(22) Date of filing: 27.05.2025
(51) Int. Cl.: H02J 7/00, B60L 53/66, H01M 10/44

(54) **CHARGING SYSTEM AND CHARGING METHOD**

(30) Priority: 12.06.2024 JP 2024095222
(71) Applicant: Hitachi, Ltd., Tokyo 100-8280 (JP)
(72) Inventor: SHIMADA, Takae, Tokyo, 100-8280 (JP); NAKATSU, Kinya, Tokyo, 100-8280 (JP); FURUKAWA, Kimihisa, Tokyo, 100-8280 (JP)
(74) Representative: MERH-IP Matias Erny Reichl Hoffmann Patentanwälte PartG mbB

(57) **Abstract**

A charging system includes: an information input unit that acquires device-to-be-charged information that is information on devices-to-be-charged connected to charging ports; a unit-allocating unit that allocates a power conversion unit to each charging port corresponding to each device-to-be-charged such that the power conversion unit is allocated in high priority to the device-to-be-charged with a high priority level based on the devices-to-be-charged information; and a switching control unit that controls a switch unit, based on a result of the allocation by the unit-allocating unit.

## Description

### BACKGROUND OF THE INVENTION

### 1. Field of the Invention

The present invention relates to a charging system and a charging method.

### 2. Description of the Related Art

An abstract of JP 2023-122190 A describes a background technology in the field of the invention as follows: "Provided is a charging system in which a power conversion unit is properly assigned to a device-to-be-charged. When a new device-to-be-charged (42-k) is connected to any one of charging ports (40-k), a unit-allocating unit 54 reduces the number of units to allocate Nm in priority for a device-to-be-charged (42-m) that shows a small drop in charge power when the number of units to allocate Nm is reduced, the device-to-be-charged (42-m) being among devices-to-be-charged (42-m) for each of which the number of units to allocate Nm is set as a plurality of units, and allocates the power conversion unit 22 put in an idle state by the reduction, to the devices-to-be-charge (42-k) newly connected."

It is preferable, according to the above-described technology, that the power conversion unit be allocated more properly to the device-to-be-charged.

The present invention has been conceived in view of the above circumstances, and an object of the present invention is to provide a charging system and a charging method that allow a power conversion unit to be properly allocated to a device-to-be-charged.

### SUMMARY OF THE INVENTION

In order to solve the above problem, a charging system of the present invention includes: a plurality of power conversion units; a plurality of charging ports that supply power to a plurality of devices-to-be-charged, respectively; a switch unit that switches a connection relationship between the power conversion units and the charging ports; an information input unit that acquires device-to-be-charged information that is information on the devices-to-be-charged connected to the charging ports; a unit-allocating unit that allocates a power conversion unit to each of the charging ports corresponding to each of the devices-to-be-charged such that the power conversion unit is allocated in high priority to the device-to-be-charged with a high priority level based on the devices-to-be-charged information; and a switching control unit that controls the switch unit, based on a result of the allocation by the unit-allocating unit.

According to the present invention, a power conversion unit can be allocated properly to a device-to-be-charged.

### BRIEF DESCRIPTION OF THE DRAWINGS

Fig. 1 is a block diagram of a charging system according to a first embodiment;
Fig. 2 is a block diagram of a cell converter unit;
Fig. 3 is a block diagram of a computer;
Fig. 4 depicts a relationship between a priority level and a power threshold;
Fig. 5 is a flowchart (1/3) of an allocation condition determination routine;
Fig. 6 is a flowchart (2/3) of the allocation condition determination routine;
Fig. 7 is a flowchart (3/3) of the allocation condition determination routine; and
Fig. 8 is a flowchart of a unit allocation routine.

### DESCRIPTION OF THE PREFERRED EMBODIMENT

### [First Embodiment]

### (Configuration of First Embodiment)

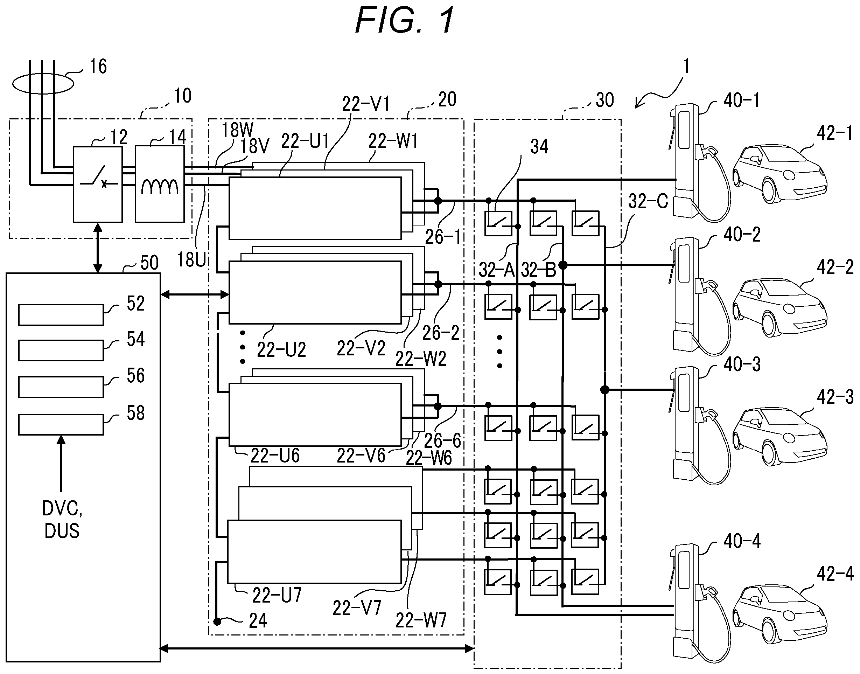

Fig. 1 is a block diagram of a charging system 1 according to a first embodiment. In Fig. 1, the charging system 1 includes a high-voltage input unit 10, a power conversion unit 20, a matrix switch unit 30 (switch unit), four charging ports 40-1 to 40-4, and a controller 50 (computer).

The charging ports 40-1 to 40-4 are connected to, for example, vehicles 42-1 to 42-4 (devices-to-be-charged) that are electric vehicles. In the following description, a plurality of components, pieces of information, and the like having the same or similar functions or meanings may be denoted by the same reference sign with hyphenated alphanumeric characters, which is, for example, written like "charging ports 40-1 to 40-4". When distinguishing these components and the like from each other is unnecessary, however, they may be simply denoted by the same reference sign with no hyphenated alphanumeric characters, which is, for example, written like "charging port 40".

The high-voltage input unit 10 receives power from, for example, a three-phase 6.6 kV AC system 16, and outputs a three-phase 6.6 kV AC voltage to lines 18U, 18 V, and 18 W of U-phase, V-phase, and W-phase via a switch 12 and a reactor 14. A power conversion unit 20 includes 21 cell converter units 22 (power conversion units) in total. AC terminals of seven cell converter units 22-U1 to 22-U7 (left sides of the cell converter units in Fig. 1) are connected in series between the line 18U and a neutral point 24.

Similarly, AC terminals of seven cell converter units 22-V1 to 22-V7 are connected in series between the line 18V and the neutral point 24, and AC terminals of seven cell converter units 22-W1 to 22-W7 are connected in series between the line 18W and the neutral point 24. DC terminals of the cell converter units 22-U1, 22-V1, and 22-W1 (right sides of the cell converter units in Fig. 1) are connected in parallel to a line 26-1. Similarly, DC terminals of cell converter units 22-Up, 22-Vp, and 22-Wp (where p = 2 to 6) are connected in parallel to a line 26-p.

The matrix switch unit 30 includes three DC buses 32-A, 32-B, and 32-C, and a plurality of switches 34. Three switches 34 in total are connected between the line 26-1 and DC buses 32-A, 32-B, and 32-C, the switches 34 corresponding one by one to the DC buses 32-A, 32-B, an 32-C, and these switches 34 switch on/off to change a state of connection between the line 26-1 and the DC buses 32-A, 32-B, and 32-C.

Similarly, three switches 34 in total are connected between a line 26-p and the DC buses 32-A, 32-B, and 32-C, the switches 34 corresponding one by one to the DC buses 32-A, 32-B, an 32-C, and these switches 34 switch on/off to change a state of connection between the line 26-1 and the DC buses 32-A, 32-B, and 32-C. Nine switches 34 in total are connected between DC terminals of cell converter units 22-U7,22-V7, and 22-W7 (right sides of the cell converter units in Fig. 1) and the DC buses 32-A, 32-B, and 32-C. These switches 34 switch on/off to change a state of connection between the cell converter units 22-U7, 22-V7, and 22-W7 and the DC buses 32-A, 32-B, and 32-C.

Charging ports 40-1,40-2, and 40-3 are connected to the DC buses 32-A, 32-B, and 32-C, respectively. A charging port 40-4 is connected to the DC bus 32-A and to the DC bus 32-B. Each charging port 40 supplies DC power received from the corresponding DC bus 32, to a vehicle 42 connected to the charging port 40, thereby charging a battery (not illustrated) incorporated in the vehicle 42. The controller 50 controls each unit of the charging system 1. Details of the controller 50 will be described later.

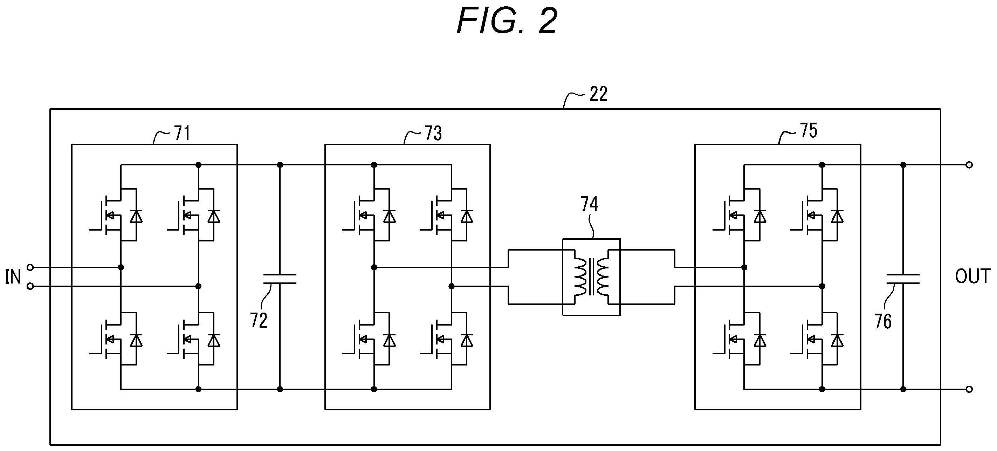

Fig. 2 is a block diagram of the cell converter unit 22.

In Fig. 2, the cell converter unit 22 includes an AC/DC converter 71, a smoothing capacitor 72, a DC/AC converter 73, a high-frequency transformer 74, an AC/DC converter 75, and a smoothing capacitor 76.

The AC/DC converter 71 converts a single-phase AC voltage with a commercial frequency inputted from an input terminal IN, into a DC voltage, and supplies the DC voltage to the DC/AC converter 73 via the smoothing capacitor 72. The DC/AC converter 73 converts the DC voltage into a single-phase AC voltage with a high frequency, and supplies the single-phase AC voltage to the AC/DC converter 75 via the high-frequency transformer 74. High frequency refers to, for example, a frequency of 100 Hz or higher. Adopting a frequency of 1 kHz or higher is preferable, and adopting a frequency of 10 kHz or higher is more preferable. The single-phase AC/DC converter 75 rectifies the single-phase AC voltage with the high-frequency, and outputs a DC voltage from an output terminal OUT via the smoothing capacitor 76.

Each of the AC/DC converters 71 and 75 and the single-phase DC/AC converter 73 has four switching elements (with no reference signs) connected in an H-bridge pattern, and diodes (with no reference sign) connected in inversely parallel to the switching elements. Semiconductor switching elements, such as metal-oxide-semiconductor field-effect transistors (MOSFETs) and insulated gate bipolar transistors (IGBTs), can be used as these switching elements, and other types of semiconductor switching elements may also be used as the switching elements.

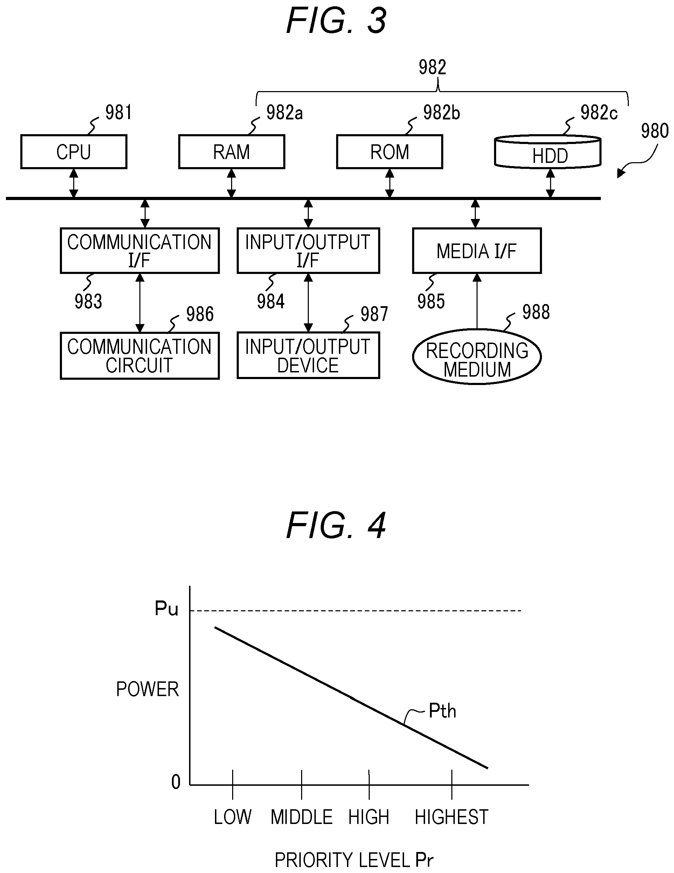

Fig. 3 is a block diagram of a computer 980.

The controller 50 shown in Fig. 1 includes one or a plurality of computers 980 shown in Fig. 3. In Fig. 3, the computer 980 includes a CPU981, a storage unit 982, a communication interface (I/F) 983, an input/output I/F 984, and a media I/F985. The storage unit 982 includes a RAM 982a, a ROM 982b, and an HDD 982c. The communication I/F 983 is connected to the communication circuit 986. The input/output I/F 984 is connected to an input/output device 987. The media I/F 985 reads and writes data from and to a recording medium 988. The ROM 982b stores a control program executed by the CPU, various data, and the like. The CPU 981 implements various functions by executing application programs loaded onto the RAM 982a.

An internal structure of the controller 50 shown in Fig. 1 includes blocks of functions implemented by application programs or the like. Specifically, as shown in Fig. 1, the controller 50 includes a charging time monitoring unit 52, a unit-allocating unit 54 (unit allocating process), a switching control unit 56 (switching control process), and an information input unit 58 (information input process).

The information input unit 58 acquires device-to-be-charged information DVC, which is information on each vehicle 42 or on the user of each vehicle 42, and use schedule information DUS. The device-to-be-charged information DVC may be identification information on the vehicle 42 or may be information indicating the content of a charging contract with the vehicle 42. When the device-to-be-charged information DVC is identification information on the vehicle 42, the information input unit 58 refers to a database (not illustrated), based on the device-to-be-charged information DVC, and acquires the specific content of the charging contract.

The device-to-be-charged information DVC may be acquired from the vehicle 42 through a plug (with no reference sign) of the charging port 40 or may be acquired from a charging member card or the like certifying the user as a charging member. The use schedule information DUS indicates a scheduled distance the vehicle 42 travels, a destination of the vehicle 42, or the like. Because neither the device-to-be-charged information DVC nor the use schedule information DUS is essential information, acquiring these pieces of information is not always necessary.

The charging time monitoring unit 52 monitors a charging time for each of the vehicles 42-1 to 42-4, that is, a time passed from the start of charging. The unit-allocating unit 54 determines the number of units to allocate N1 to the number of units to allocate N4, each number of units to allocate representing the number of cell converter units 22 to be allocated to the corresponding one of the vehicles 42-1 to 42-4. The switching control unit 56 sets on-states/off-states of respective switches 34 of the matrix switch unit 30 in such a way as to provide the number of units to allocate N1 to the number of units to allocate N4 having been determined.

The unit-allocating unit 54, if possible, sets the number of units to allocate N1 to the number of units to allocate N4 (not illustrated) that are sufficient for supplying demanded charge power to all charging ports 40 (i.e., the vehicles 42). However, when a specific situation, e.g., a situation where the number of vehicles 42 connected to the charging ports 40 increases, arises, setting the sufficient number of units to allocate for all charging ports 40 becomes impossible.

In this case, the unit-allocating unit 54 sets any one of the number of units to allocate N1 to the number of units to allocate N4 to the number of units to allocate with which only charge power smaller than demanded charge power can be supplied. In this embodiment, for each of the charging ports 40-1 to 40-4, parameters called priority levels Pr-1 to Pr-4 (not illustrated) are set, based on the contract contents or the like related to the vehicles 42 connected to the charging ports 40-1 to 40-4. The unit-allocating unit 54 performs unit allocation in such a way as to allow a charging port with a higher priority level Pr to keep necessary charge power in priority. Control details for allowing such a process will be described with reference to Fig. 4.

Fig. 4 depicts a relationship between the priority level Pr and a power threshold Pth (threshold).

Unit rated power Pu shown in Fig. 4 represents maximum power that one cell converter unit 22 can output. The power threshold Pth is an allowable value for a drop in charge power caused by a reduction in the corresponding one of the number of units to allocate N1 to the number of units to allocate N4. As indicated in Fig. 4, the unit-allocating unit 54 sets the power threshold Pth higher as the priority level Pr gets lower. As a result, for a charging port 40 with a low priority level Pr, one of the number of units to allocate N1 to the number of units to allocate N4 is more likely to be reduced.

In contrast, for a charging port 40 with a high priority level Pr, one of the number of units to allocate N1 to the number of units to allocate N4 is less likely to be reduced because the power threshold Pth for the charging port 40 is low. A characteristic line of the power threshold Pth is not limited to the characteristic line shown in Fig. 4. In other words, the characteristic line of the power threshold Pth may be set arbitrarily in a range "0 to Pu", providing that the characteristic line demonstrates that the power threshold value Pth gets lower as the priority level Pr gets higher.

### <Operation According to First Embodiment>

An operation according to a first embodiment will then be described.

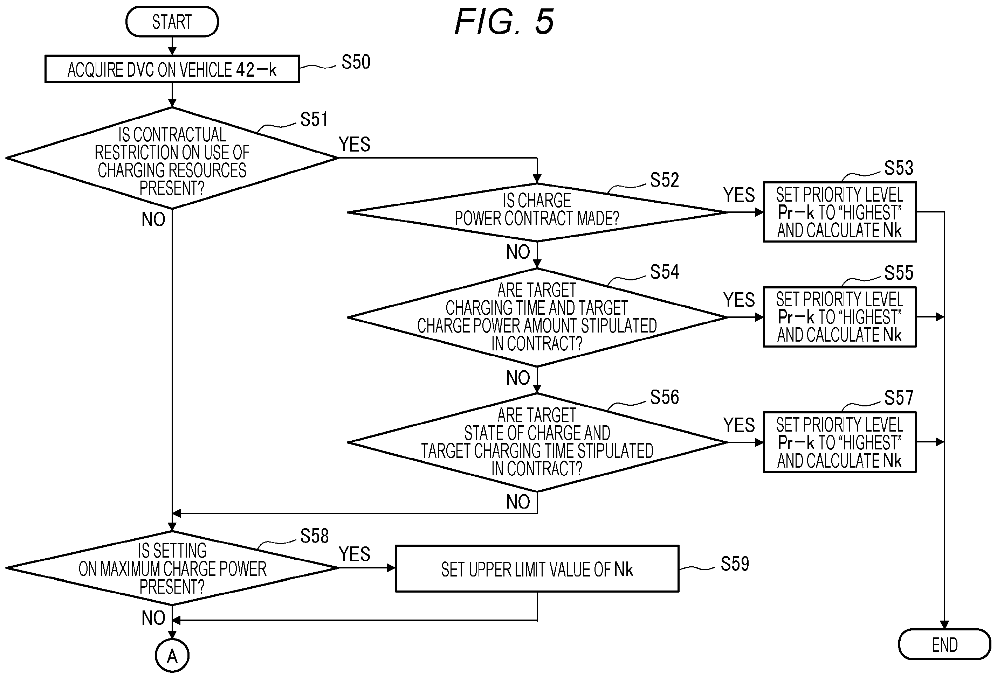

Figs. 5 to 7 are flowcharts of an allocation condition determination routine.

The controller 50 starts this routine when a vehicle 42-k is connected to a charging port 40-k (1 ≤ k ≤ 4), which is one of the charging ports 40-1 to 40-4.

In Fig. 5, when the routine proceeds to step S50, the information input unit 58 acquires device-to-be-charged information DVC on the vehicle 42-k connected to the charging port 40-k. Subsequently, when the routine proceeds to step S51, the unit-allocating unit 54 determines whether a "contractual restriction on use of the charging resource" is present, based on the acquired device-to-be-charged information DVC.

When "Yes" results at step S51, the routine proceeds to step S52, at which the unit-allocating unit 54 determines whether a "charge power" contract is made, based on the device-to-be-charged information DVC. The "charge power" contract includes, for example, a provision that "charge power demanded by the vehicle 42-k shall be supplied". When "Yes" results at step S52, the routine proceeds to step S53, at which the unit-allocating unit 54 sets a priority level Pr-k of the charging port 40-k to "highest". The unit-allocating unit 54 then calculates the number of units to allocate that is necessary for supplying charge power specified in the contract as charge power to be supplied to the vehicle 42-k. The number of units to allocate for the charging port 40-k may be denoted as Nk.

When "No" results at step S52, on the other hand, the routine proceeds to step S54, at which the unit-allocating unit 54 determines whether a target charging time TCG (not illustrated) and a target charge power amount JCG (not illustrated) are specified, based on device-to-be-charged information DVC. In other words, the unit-allocating unit 54 has a function of specifying the target charging time TCG and the target charge power amount JCG, based on the device-to-be-charged information DVC. The target charging time TCG is a target value for a charging time, that is, a maximum time to take from the start of charging to the end of charging, and the target charge power amount JCG is a target value for an amount of power with which the vehicle 42-k is charged within the charging time. When "Yes" results at step S54, the routine proceeds to step S55, at which the unit-allocating unit 54 sets the priority level Pr-k to "highest". in addition, the unit-allocating unit 54 calculates charge power needed to supply power of the target charge power amount JCG within the target charging time TCG, and calculates the number of units to allocate Nk required for supply of the charge power.

When "No" results at step S54, on the other hand, the routine proceeds to step S56, at which the unit-allocating unit 54 determines whether a target state of charge SOCT and the target charging time TCG are stipulated in the contract, based on the device-to-be-charged information DVC. The target state of charge SOCT is a target value for a state of charge (SOC) at completion of charging. When "Yes" results at step S56, the routine proceeds to step S57, at which the unit-allocating unit 54 sets the priority level Pr-k to "highest". In addition, the unit-allocating unit 54 calculates charge power needed to achieve the target state of charge SOCT within the target charging time TCG, and calculates the number of units to allocate Nk required for supply of the charge power.

When "No" results at step S51 or S56, on the other hand, the routine proceeds to step S58, at which the unit-allocating unit 54 determines whether setting on the maximum charge power Pmax (not illustrated) is present, based on the device-to-be-charged information DVC. The maximum charge power Pmax is a parameter for limiting the maximum of the charge power, and is usually set by the user of the vehicle 42-k.

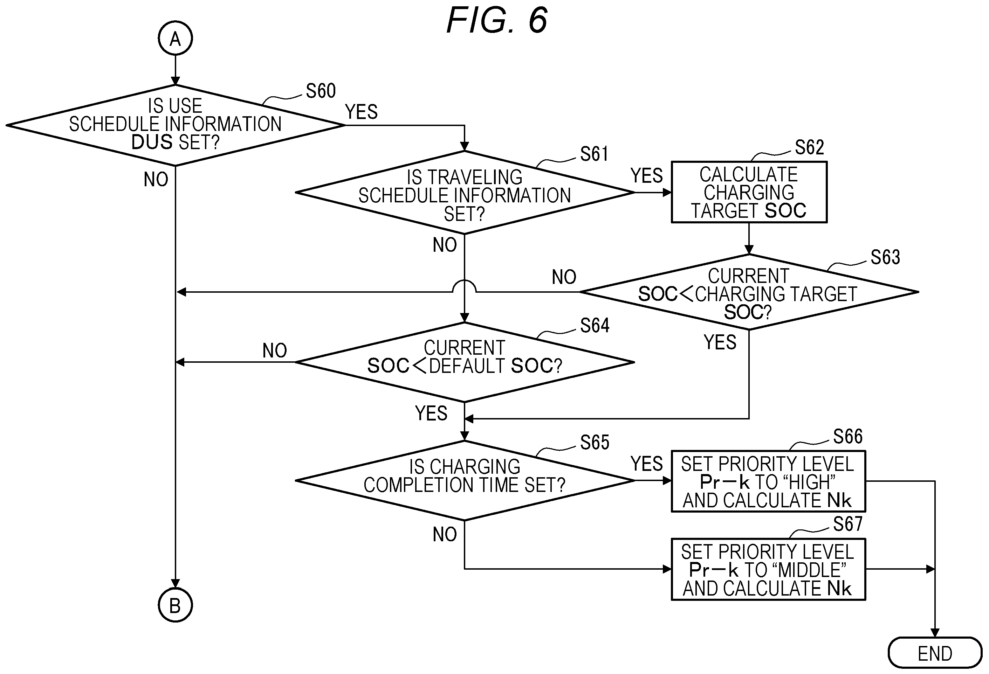

The maximum charge power Pmax is set for the purpose of, for example, preventing deterioration of the battery incorporated in the vehicle 42 or extending the service life of the battery. There is also a case where when an administrator of the charging system 1 wants to limit supply of the charge power to the vehicle 42 or the user thereof, the administrator sets the maximum charge power Pmax. When "Yes" results at step S58, the routine proceeds to step S59, at which the unit-allocating unit 54 calculates the number of units required for supply of the set maximum charge power Pmax, and sets a result of the calculation as an upper limit value of the number of units to allocate Nk. When "No" results at step S58 or a process at step S59 ends, the routine proceeds to step S60 (see Fig. 6).

At step S60 of Fig. 6, the unit-allocating unit 54 determines whether the use schedule information DUS is set for the vehicle 42-k. When "Yes" results at step S60, the routine proceeds to step S61, at which the unit-allocating unit 54 determines whether traveling schedule information (information on a scheduled distance to travel, a destination, etc.) is set in the use schedule information DUS.

When "Yes" results at step S61, the routine proceeds to step S62, at which the unit-allocating unit 54 calculates a SOC required for meeting a traveling schedule, and defines the calculated SOC as a charge target SOC. Subsequently, at step S63, the unit-allocating unit 54 determines whether the current SOC of the vehicle 42-k is lower than the charge target SOC. When "Yes" results at step S63, the routine proceeds to step S65.

When "No" results at step S61, on the other hand, the routine proceeds to step S64, at which the unit-allocating unit 54 determines whether the current SOC of the vehicle 42-k is lower than a default SOC of a given value. When "Yes" results at step S64, the routine proceeds to step S65. The "default SOC" is an SOC value that is used in place of the charge target SOC when the traveling schedule information is not set in the use schedule information DUS. The "default SOC" is, for example, 60% or 80%.

At step S65, the unit-allocating unit 54 determines whether a charging completion time, such as a scheduled time to start using the vehicle 42-k, is set in the use schedule information DUS. When "Yes" results at step S65, the routine proceeds to step S66, at which the unit-allocating unit 54 sets the priority level Pr-k to "high".

In addition, the unit-allocating unit 54 calculates charge power needed to charge up to the target SOC (default SOC or charging target SOC) before the set charging completion time, and calculates the number of units to allocate Nk required for supply of the charging power, and then this routine comes to an end. When "No" results at step S65, on the other hand, the routine proceeds to step S67, at which the unit-allocating unit 54 sets the priority level Pr-k to "middle", and calculates the number of units to allocate Nk required for supply of the above charge power, and then this routine comes to an end.

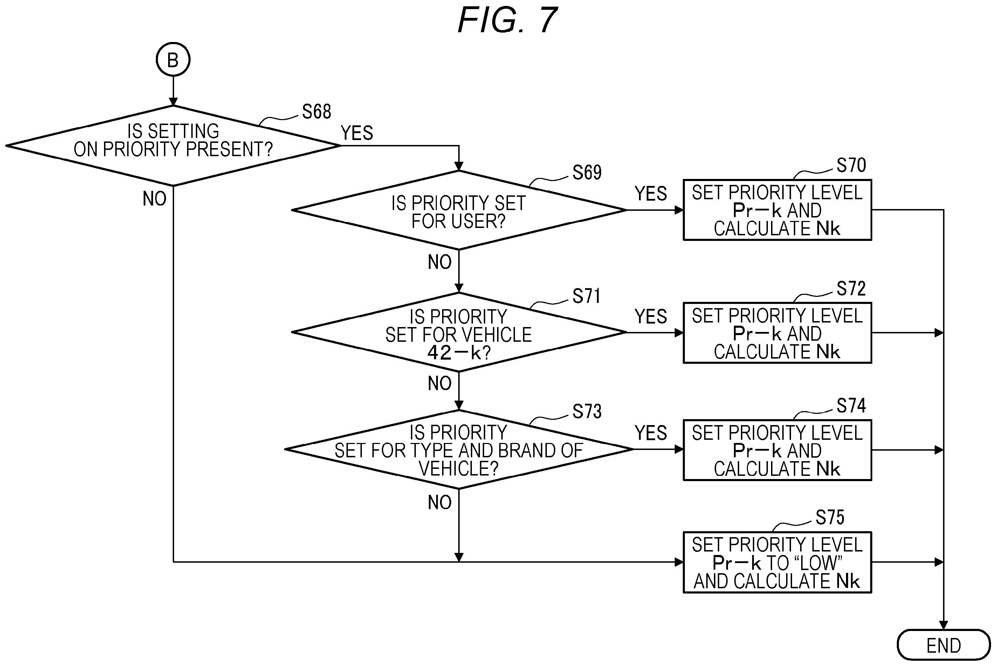

When "No" results at any one of steps S60, S63, and S64 in Fig. 6, the routine proceeds to step S68 in Fig. 7. At step S68, the unit-allocating unit 54 determines whether setting on any priority (status) is present, based on the device-to-be-charged information DVC. When "Yes" results at step S68, the routine proceeds to step S69, at which the unit-allocating unit 54 determines whether priority (status) of the user of the vehicle 42-k is registered.

When "Yes" results at step S69, the routine proceeds to step S70, at which the unit-allocating unit 54 sets the priority level Pr-k according to the priority (status) of the user, and calculates the number of units to allocate Nk. When "No" results at step S69, on the other hand, the routine proceeds to step S71, at which the unit-allocating unit 54 determines whether priority of the vehicle 42-k is registered. It is assumed that vehicles having their priority registered include an emergency vehicle, a disaster support vehicle, and a specific official vehicle.

When "Yes" results at step S71, the routine proceeds to step S72, at which the unit-allocating unit 54 sets the priority level Pr-k according to the priority of the vehicle 42-k, and calculates the number of units to allocate Nk. When "No" results at step S71, on the other hand, the routine proceeds to step S73, at which the unit-allocating unit 54 determines whether priority (status) of the type or brand of the vehicle 42-k is registered.

When "Yes" results at step S73, the routine proceeds to step S74, at which the unit-allocating unit 54 sets the priority level Pr-k according to the priority (status) of the type or brand of the vehicle, and calculates the number of units to allocate Nk. When "No" results at step S68 or S73, on the other hand, the routine proceeds to step S75. At step S75, the unit-allocating unit 54 sets the priority level Pr-k to "low", and calculates the number of units to allocate Nk. When step S75 is over, the routine comes to an end.

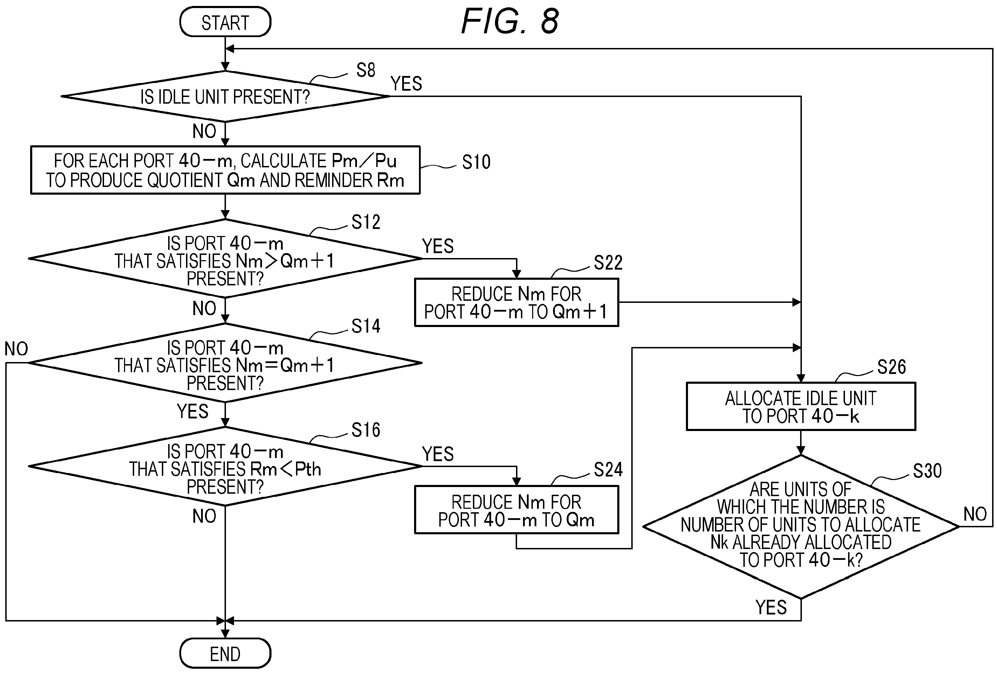

Fig. 8 is a flowchart of a unit allocation routine. This routine is executed after the allocation condition determination routine (Figs. 5 to 7) is executed.

In Fig. 8, each of "m" and "k" denotes the port number of the charging port 40 and is any one of "1" to "4" in the example shown in Fig. 1. The port number k is the port number of the charging port 40-k which is waiting for unit allocation after being connected to the vehicle 42-k. The number of cell converter units 22 allocated to a charging port 40-m is referred to as the number of units to allocate Nm, and power supplied from the charging port 40-m to a vehicle 42-m is referred to as supply power Pm.

In Fig. 8, when the routine proceeds to step S8, the unit-allocating unit 54 determines whether an idle unit, i.e., a unit not used for charging is present among the cell converter units 22. When "Yes" results at step S8, the routine proceeds to step S26. At this step S26, the unit-allocating unit 54 allocates an idle unit to the charging port 40-k.

Subsequently, when the routine proceeds to step S30, the unit-allocating unit 54 determines whether cell converter units 22 the number of which matches the number of units to allocate Nk are allocated to the charging port 40-k. When "Yes" results at this step, the routine comes to an end. When "No" results at this step, on the other hand, the routine returns to step S8.

When an idle unit is not present, "No" results at step S8, in which case the routine proceeds to step S10. At step S10, for the charging port 40-m with the number of units to allocate Nm representing a plurality of units to allocate, the unit-allocating unit 54 carries out integer division of dividing supply power Pm by unit rated power Pu to produce a quotient Qm and a remainder Rm. Subsequently, when the routine proceeds to step S12, the unit-allocating unit 54 determines whether a charging port 40-m that satisfies "Nm > Qm + 1" is present. In other words, the unit-allocating unit 54 determines whether a charging port 40-m with the number of units to allocate Nm larger than the number of units required is present.

One reason why the number of units to allocate Nm may become larger than the number of units required is that as the state of charge of the battery incorporated in the vehicle 42 increases, a charge current that can be supplied to the vehicle 42 decreases. Specifically, even if the number of units to allocate Nm is just the number of units required, i.e., the sufficient number of units at the start of charging, the number of units to allocate Nm may increase to become larger than the number of units required as the charging time elapses. When "Yes" results at step S12, the routine proceeds to step S22.

At step S22, the unit-allocating unit 54 reduces the number of units to allocate Nm for the charging port 40-m, to "Qm + 1". Even if the number of units to allocate Nm is reduced in this manner, the supply power Pm originally needed can be maintained. Thereafter, the routine proceeds to step S26, at which the unit-allocating unit 54 allocates an idle unit resulting from reduction of the number of units to allocate Nm, to the charging port 40-k waiting for unit allocation.

When "No" results at step S12, the routine proceeds to step S14. At this step, the unit-allocating unit 54 determines whether a charging port 40-m that satisfies "Nm = Qm + 1" is present. When "Yes" results at step **S14,** the routine proceeds to step S16. At step S16, the unit-allocating unit 54 determines whether a charging port 40-m with the remainder Rm smaller than the power threshold Pth is present.

When "Yes" results at step S16, the routine proceeds to step S24. At step S24, the unit-allocating unit 54 reduces the number of units to allocate Nm for a charging port 40-m with the largest (power threshold Pth - remainder Rm), to the quotient Qm, the charging port 40-m being among charging ports 40-m that satisfy Rm < Pth. Thereafter, the routine proceeds to step S26, at which the unit-allocating unit 54 allocates an idle unit resulting from reduction of the number of units to allocate Nm, to the charging port 40-k waiting for unit allocation.

When "No" results at step S14 or S16, this routine comes to an end. In this case, at the current point of time, the cell converter units 22 the number of which matches the number of units to allocate Nk are not allocated to the charging port 40-k to which the vehicle 42-k is newly connected.

What steps S16 and S24 mean will now be described with reference to a specific example. A case is assumed where the unit rated power Pu is 50 [kW], and, for a certain charging port 40-m, the supply power Pm is 210 [kW] and the number of units to allocate Nm is "5". In this case, at step S10, the quotient Qm and the remainder Rm are calculated at "4" and "10 [kW]", respectively.

When the power threshold Pth determined according to the priority level is 25 [kW], the remainder Rm = 10 [kW] is smaller than the power threshold Pth = 25 [kW] and (power threshold Pth - remainder Rm) is 15 [kW]. When the power threshold Pth is 15 [kW], on the other hand, the remainder Rm = 10 [kW] is smaller than the power threshold Pth = 15 [kW] and (power threshold Pth - remainder Rm) is 5 [kW]. Comparing these two cases reveals that the larger power threshold Pth of 25 [kW] gives the larger value of (power threshold Pth- remainder Rm), in which case the number of units to allocate Nm, which is originally "5", is reduced to quotient Qm = 4. In this manner, the number of units to allocate is reduced such that the number of units to allocate for a charging port with a larger power threshold Pth set therefor is reduced first. The maximum supply power Pm that can be achieved by the number of units to allocate Nm = 4 is 4 × 50 [kW] = 200 [kW]. Thus, the supply power Pm that is originally 210 [kW] is reduced by the remainder Rm = 10 [kW], to become 200 [kW].

When the power threshold value Pth is 5 [kW], the remainder Rm = 10 [kW] is larger than the power threshold value Pth = 5 [kW], which is not the case of reducing the number of units to allocate Nm.

When the supply power Pm of the charging port 40-m is reduced, a charging time at the charging port 40-m gets longer. However, when the remainder Rm, which is equivalent to power to be reduced, is smaller than the power threshold Pth that is determined according to the priority level, the number of units to allocate Nm is reduced, and this allows power supply to the charging port 40-k waiting for unit allocation (charging).

In this manner, according to this embodiment, the unit-allocating unit 54 allocates the cell converter unit 22 to the charging port 40 corresponding to each vehicle 42 in such a way as to allocate the cell converter unit 22 in priority to the vehicle 42 with a higher priority level Pr. In other words, the unit-allocating unit 54 determines the number of cell converter units 22 to allocate to the charging port 40-m, based on the priority level Pr-m. As a result, according to this embodiment, a charging port 40-m with a lower priority level Pr-m (a higher power threshold Pth) is more likely to have its number of units to allocate Nm reduced.

### [Effects of Embodiment]

According to the above-described embodiment, the unit-allocating unit 54 allocates a power conversion unit (22) to the charging port 40 corresponding to each device-to-be-charged (42) in such a way as to allocate the power conversion unit (22) in priority to the device-to-be-charged (42) with a higher priority level Pr based on the device-to-be-charged information DVC. As a result, the power conversion unit (22) can be properly allocated to the device-to-be-charged (42), based on the priority level Pr.

It is more preferable that the unit-allocating unit 54 have a function of specifying the target charging time TCG, which is the target value for the maximum time to take from the start of charging to the end of charging, and the target charge power amount JCG, which is the target value for the amount of power with which the device-to-be-charged (42) is charged, based on the device-to-be-charged information DVC, and a function of determining the priority level Pr, based on the target charging time TCG and on the target charge power amount JCG, and determining the number of power conversion units (22) to be allocated to the charging port 40, based on the priority level Pr. In this configuration, because the priority level Pr can be determined based on the target charging time TCG and the target charge power amount JCG, the power conversion unit (22) can be allocated more properly to the device-to-be-charged (42).

It is also more preferable that the unit-allocating unit 54 have a function of specifying the target charging time TCG, which is the target value for the maximum time to take from the start of charging to the end of charging, and the target state of charge SOCT, which is the target value for the state of charge at the end of charging, based on the device-to-be-charged information DVC, and a function of determining the priority level Pr, based on the target charging time TCG and the target state of charge SOCT, and determining the number of power conversion units (22) to be allocated to the charging port 40, based on the priority level Pr. In this configuration, because the priority level Pr can be determined based on the target charging time TCG and the target state of charge SOCT, the power conversion unit (22) can be allocated more properly to the device-to-be-charged (42).

It is also more preferable that the unit-allocating unit 54 have a function of specifying the maximum charge power Pmax, which is the maximum of power supplied to the device-to-be-charged (42), based on the device-to-be-charged information DVC, and a function of determining the priority level Pr, based on the maximum charge power Pmax, and determining the number of power conversion units (22) to be allocated to the charging port 40, based on the priority level Pr. In this configuration, because the priority level Pr can be determined based on the maximum charge power Pmax, the power conversion unit (22) can be allocated more properly to the device-to-be-charged (42).

It is also more preferable that the unit-allocating unit 54 further have a function of setting the threshold (Pth) for the charging port 40, the threshold (Pth) corresponding to the priority level Pr of the charging port 40, and a function of reducing the number of power conversion units (22) to allocate for the charging port 40 which has its power output reduced in an amount smaller than the threshold (Pth) when the number of power conversion units (22) to allocate is reduced, the charging port 40 being among charging ports 40 to each of which a plurality of power conversion unit (22) are allocated. In this configuration, based on the threshold (Pth), the number of power conversion units (22) to allocate can be reduced for some charging ports 40. As a result, the power conversion unit (22) can be allocated more properly to the device-to-be-charged (42).

It is also more preferable that the unit-allocating unit 54 set the threshold (Pth) lower as the priority level Pr gets higher. In this configuration, because a proper threshold (Pth) can be set based on the priority level Pr, the power conversion unit (22) can be allocated more properly to the device-to-be-charged (42).

In other words, a charging port 40 with a lower priority level Pr (a higher power threshold Pth) is more likely to have its number of units to allocate Nm reduced. As a result, as an influence on a device-to-be-charged (42-m) having been charged already is suppressed according to a priority level, the power conversion units (22) can be properly allocated to a greater number of devices-to-be-charged (42).

It is also more preferable that the power conversion units (22) be connected in series to the AC power supply (16) and that the power conversion units (22) each convert an incoming AC voltage into a DC voltage and output the DC voltage. In this configuration, power can be directly received from the high-voltage AC power supply (16).

It is also more preferable that the unit-allocating unit 54 further have a function by which, when a devices-to-be-charged (42) whose charging time (Tm) exceeds a given time (Tth) is present, allocation of the power conversion unit (22) to the charging port 40 corresponding to the devices-to-be-charged (42) is canceled. In this configuration, the power conversion unit (22) can be used more effectively.

### [Modifications]

The present invention is not limited to the above embodiment and can be modified into various forms. The above embodiment has been described exemplarily for easy understanding of the present invention, and is not necessarily limited to an embodiment including all constituent elements described above. Other constituent elements may be added to constituent elements of the above embodiment, and some of constituent elements of the embodiment may be replaced with other constituent elements. A group of control lines and data lines considered to be necessary for description are illustrated in drawings, and all control lines and data lines the product needs are not necessarily illustrated. It is safe to assume that, actually, almost the entire constituent elements are interconnected. Possible modifications of the above embodiment are, for example, as follows.
(1) While an example in which the vehicle 42 is an example of the device-to-be-charged has been described in the above embodiment, the device-to-be-charged is not limited to the vehicle 42 and may be a moving object, such as a ship or a flying object equipped with a battery, or an electric device.
(2) In the above embodiment, the charging system 1 receives power from the AC system 16. However, since a DC power system has become widespread in recent years, the charging system 1 may be connected to a DC power supply, such as a DC power system, which is used in place of the AC system 16. In this case, the cell converter unit 22 may dispense with the AC/DC converter 71 and the smoothing capacitor 72, which are included in the cell converter unit 22 as shown in Fig. 2.
(3) The hardware of the controller 50 of the above embodiment can be provided as a generic computer. Therefore, the flowcharts shown in Figs. 5 to 8 and other programs for executing various processes described above may be stored in a storage medium or distributed via a transmission path.
(4) While the routines shown in Figs. 5 to 8 and other processes described above have been explained in the above embodiment as software-based processes using programs, some or all of these routines and processes may be replaced with hardware-based processes using an application specific integrated circuit (ASIC), a field programmable gate array (FPGA), or the like.
(5) Various processes executed in the above embodiment may be executed by a server computer via a network (not illustrated). Likewise, various pieces of data stored in the above embodiment may be stored in the server computer.

## Claims

1. A charging system comprising:
a plurality of power conversion units;
a plurality of charging ports that supply power to a plurality of devices-to-be-charged, respectively;
a switch unit that switches a connection relationship between the power conversion units and the charging ports;
an information input unit that acquires device-to-be-charged information that is information on the devices-to-be-charged connected to the charging ports;
a unit-allocating unit that allocates a power conversion unit to each of the charging ports corresponding to each of the devices-to-be-charged such that the power conversion unit is allocated in high priority to the device-to-be-charged with a high priority level based on the devices-to-be-charged information; and
a switching control unit that controls the switch unit, based on a result of the allocation by the unit-allocating unit.

2. The charging system according to claim 1, wherein
the unit-allocating unit has:
a function of specifying a target charging time that is a target value for a maximum time to take from a start of charging to an end of charging, and a target charge power amount that is a target value for an amount of power with which the device-to-be-charged is charged, based on the device-to-be-charged information; and
a function of determining the priority level, based on the target charging time and the target charge power amount, and determining a number of the power conversion units to be allocated to the charging port, based on the priority level.

3. The charging system according to claim 1, wherein
the unit-allocating unit has:
a function of specifying a target charging time that is a target value for a maximum time to take from a start of charging to an end of charging, and a target state of charge that is a target value for a state of charge at the end of charging, based on the device-to-be-charged information; and
a function of determining the priority level, based on the target charging time and the target state of charge, and determining a number of the power conversion units to be allocated to the charging port, based on the priority level.

4. The charging system according to claim 1, wherein
the unit-allocating unit has:
a function of specifying a maximum charge power that is a maximum of power supplied to the device-to-be-charged, based on the device-to-be-charged information; and
a function of determining the priority level, based on the maximum charge power, and determining a number of the power conversion units to be allocated to the charging port, based on the priority level.

5. The charging system according to claim 1, wherein
the unit-allocating unit has:
a function of setting a threshold for the charging port, the threshold corresponding to the priority level of the charging port; and
a function of reducing a number of the power conversion units to allocate for the charging port which has its power output reduced in an amount smaller than the threshold when the number of the power conversion units to allocate is reduced, the charging port being among the charging ports to which the power conversion units are allocated.

6. The charging system according to claim 5, wherein
the unit-allocating unit sets the threshold lower as the priority level gets higher.

7. A charging method executed by a charging system comprising:
a plurality of power conversion units;
a plurality of charging ports that supply power to a plurality of devices-to-be-charged, respectively;
a switch unit that switches a connection relationship between the power conversion units and the charging ports; and
a computer, wherein
the computer executes:
an information input process of acquiring device-to-be-charged information that is information on the devices-to-be-charged connected to the charging ports;
a unit allocating process of allocating a power conversion unit to each of the charging ports corresponding to each of the devices-to-be-charged such that the power conversion unit is allocated in high priority to a device-to-be-charged with a high priority level based on the devices-to-be-charged information; and
a switching control process of controlling the switch unit, based on a result of the allocation by the unit allocating process.
